# EUROPEAN PATENT APPLICATION

(11) **EP 1 158 419 A1**
(43) Date of publication of application: **28.11.2001**
(21) Application number: 00110388.6
(22) Date of filing: 15.05.2000
(51) Int. Cl.: G06F 17/30

(54) **Method and apparatus for observing user orientated information from data networks**

(71) Applicant: Huss, Gabriele, 86573 Obergriesbach (DE)
(72) Inventor: Huss, Gabriele, 86573 Obergriesbach (DE)
(74) Representative: Betten & Resch

(57) **Abstract**

An apparatus and a method for observing user orientated information from a data network, comprises the steps of: inputting an user defined search profile (301) having at least one search agent (303); spidering a data content of said data network (130) by a web spider (561); indexing said spidered content; matching said indexed content with said search profile (301); comparing said indexed and matched content with a previously stored content, and determing if there is any difference between said indexed and matched content and said previously stored content; storing said indexed and matched content as new data content; and informing said user about said new data content, when said comparison reveals a difference therebetween.

## Description

### Field of the invention

The present invention relates to a method and an apparatus for observing changing information included in a data network which is relevant to a user.

### Description of the related art

It' s a natural need of data network users particularly of internet users to obtain concrete information corresponding to fields being relevant to the respective user which are generally obtained by usage of conventional search engines. If a user is looking for information at first he has to contact specific search engines and then he has to learn a corresponding search engine's language in order to be able to communicate therewith. To be informed on recent and latest news and changes is in the user's responsibility. However, there are provided internet newsletters offered by search enginge suppliers which are not satisfactory either due to their low and specific updated information contents being adapted by the search engine suppliers. A user has no possibility to decide which content is a relevant one and to which size of field the information should be limited.

An internet webside that is to be found through a search engine must either be registered in the search engine which is decided by the search engine suppliers or can be detected automatically in case the search engine crawls the web on its own. However, since the number of pages in the World Wide Web (hereinafter referred to as WWW) continues to grow dramatically most search engines require explicit registeration of any Uniform Resource Locator (hereinafter referred to as URL) which is an unique identifier or pointer to any resource that can be found on the internet.

Once the page content has been indexed and after that stored in the search engine a user is able to query this search engine for getting information on a desired subject. Unfortunally, there is no option offerd to only get information on pages which are on the one hand relevant to the user - he also gets information on other subjects - and on the other hand which have changed their content within a time period to be determined by the user.

There is no conventional concept to be informed on changements of relevant information in the prior art.

### Summary of the invention

It is one object of the invention to provide a method and an apparatus for observing user orientated information from data networks particularly from the WWW.

It is another object of the present invention to provide a personalized service which registers user's preferences.

According to an aspect of the present invention, at least one search profile to be used for observing user orientated information in a data network is defined on a computer which is connected to the data network. This provides the user to decide which information he/she wants to be informed about, when this information changes or contain new contents. The user defined search profile filters wanted and unwanted information before the user is confrontated with all the information wich is related to his/her search term(s).

With such a configuration the owner or operator of the computer on which the user orientated search profile is defined or generated may directly influence which data content is to be observed and therby prevent to be overloaded with irrelevant information. A software module running either on a server or a personal computer may generate the search profile on the user's desires and requirements.

Furthermore, such a configuration allows the user to determine the time periods in which the relevant data networks should be checked on new data content. Thereby ensuring permanent relevance of the data contents.

The scope of offered information on data networks, for example as on the WWW, exceed the user's capabilities to cope with that huge amount of information. Limiting the plurality of information by the user directly results in clear and fast information being pertinent to the user.

This software module may be installed on an internet host or a server managing any other kind of data network as add-on. The thereby achieved new data content information is then sent as a short informing message to the user.

Preferably the update intervals/frequency of checking wether new data contents are available or not can also be controlled. Thereby relevance of new data can be ensured.

Further, it is preferred that search terms can be inputted as entire text documents. This results in a comfortable language which prevents the user of learning difficult and different search engine languages. In addition there is provided a check for entire phrases contained in the text documents.

Still further, it is possible to define a search profile only having a search agent and no related search term, allowing a user to observe entire data links and adresses and omitting the matching process in order to be informed in any case of a new data content of the corresponding data link and/or adress.

Other objects, features, and advantages will become clear from the following description of preferred embodiments of the present invention with reference to attached drawings.

### Brief descripton of the drawings

- Fig.1: shows a block diargram of a first embodiment of the present invention.
- Fig.2: shows a flow chart illustrating a method according to a first embodiment of the present invention.
- Fig.3: illustrates a search profile according to embodiments of the present invention.
- Fig.4: shows a second embodiment of the present invention, wherein the user is directly connected a data network.
- Fig.5: schematically illustrates a module composition of the embodiments of the present invention.

### Detailed description of preferred embodiments

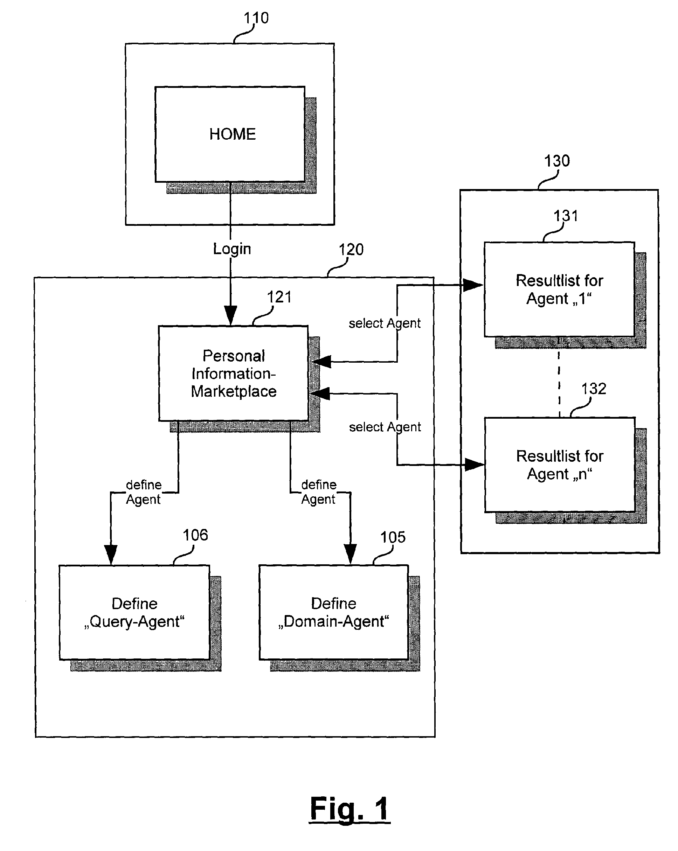

Fig.1 shows a block diagram of a first embodiment of the present invention. A user is located at a block designated "Home" 110, e.g. a personal computer or client. This client 110 is connected by a data connection to a server or host 120, which is connected by a data connection to a data network 130. The personal computer, client or server comprise a unit for inputting data as a keyboard or the like, and a CPU. Personal homepages are provided for the users thereon which are designated "Personal Information Marketplace"121. On the server 120 there is provided a limited storage area for each registered user on which user relevant data can processed and stored for the respective user. If a user is not registered yet he is requested to register. Registrating allows a user to use the services offerd on said server.

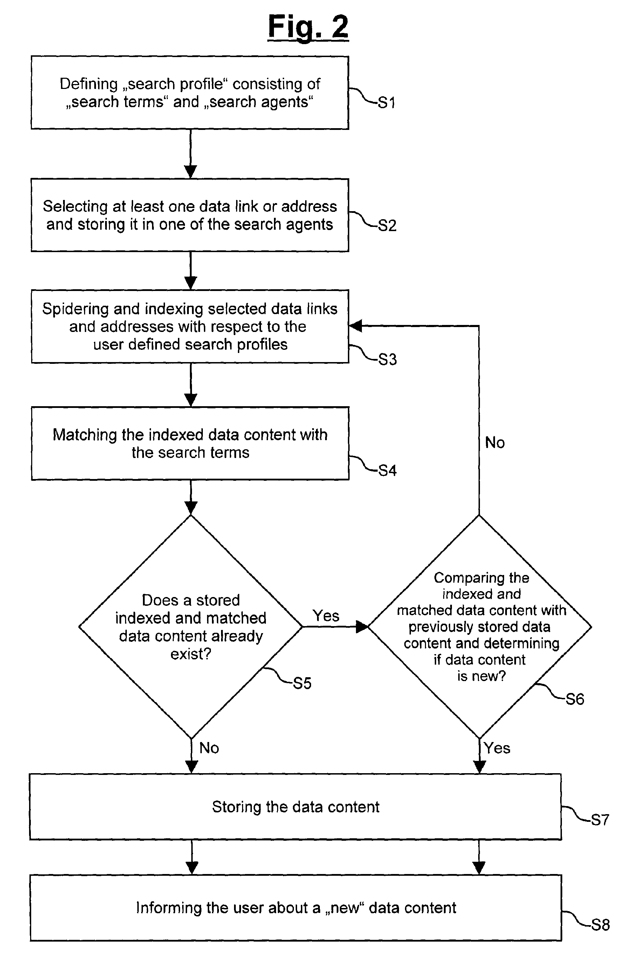

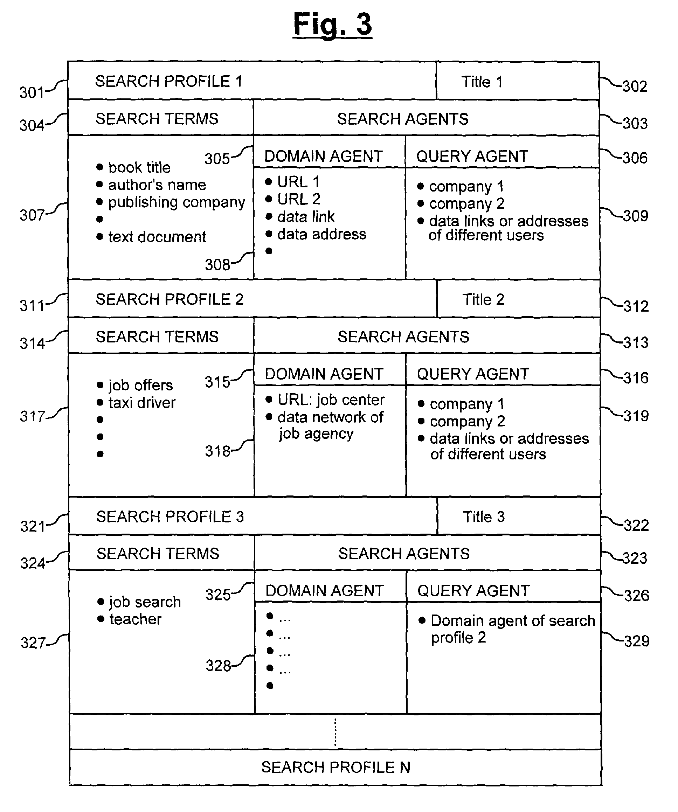

The main service is to observe and inform the user on any change of a data which has been determined by the user to be relevant. Another service is the registration of the user's preferences with respect to the kind of information he/she wants to be supplied with and to the location where to get these information from. The personal homepage can be entered by loging-in. At first the user is asked to define a search profile (step S1 in Fig.2) which includes at least one search agent 303 and optionally search terms 304, as illustrated in Fig.3, if no search profile 301 or agent 303 exists. If there is already one or more search profiles 301, 311, 321, the user is free to choose wether a new search profile should be defined, an existing one should be amended or an observing process according to that existing search profile should be carried out. Search terms 304, 314, 324 may be defined in the search profiles. Further a domain (305, 315, 325) and/or a query agent (306, 316, 326) may be defined.

Fig.3 illustrates a search profile 301 comprising search terms 304 and search agents (305). The search agents 303 can be split into two categories, i.e. in a domain agent 305, 315, 325 and a query agent 306, 316, 326, as will be explained below. The search terms 307 are inputted by the user. Single terms or complete text documents can serve as search terms 307, 317, 327. In addition, it is possible to name the respective search profiles 301, 311, 321 with an appropriate title 302, 312, 322 which allows the user to choose quickly between different search profiles when previously having defined a plurality of search terms.

Furthermore, there is provided the possibility to relate the same search term(s) 304 to different search agents and the other way around, as will be illustrated below. Still furthermore, the user is able to set a time period which is stored in the search profile, which is for simplicity not depicted in Fig.3. The time period is used for determining the time at which the process of observing and checking a chosen data link or adress defined in the search agents should be repeated.

A domain agent is at least one data link or adress 308 which has to be checked for any changing data content included therein. This can be URLs which designate specific adresses of webpages but also data links to any other type of data network as data sources or the like. The user is able to decide on its own which data has to be observed and which not. The user selects at least one data link or adress 308 which is accordingly related to the above-mentioned search profile 301 in order to get the corresponding relations between search terms to be observed and data links or adresses leading to the data to be observed. Further, data links or adresses can also be manually inputted by the user.

Furthermore, a query agent 306 can be selected by the user. A query agent searchs the sum of all registered data links and adresses to be observed independent of the user who has selected the respective data for the search terms defined in his/her search profile. The search terms can be provided as entire text documents or files. No particular language is required to define the search profile which results in a common usable search profile, in contrast to conventional search engines.

Additionally, when a user inputs search terms being similar to other ones being inputted by different users, he/she is offered a query agent containing all adresses and links which have been related to that similar search term(s).

For example, the terms "bakery", "management" and "accountancy" have been inputted by different users in different orders as
"bakery/ management/ accountancy"
"bakery/ accountancy/ management"
"management/ accountancy/ bakery"
"ect."

With respect to the user defined profile inputs an organized search catalog can be generated being realized in a query agent listing all relevant data links and/or adresses. Thus, it is easy for a user who is offered to choose from said organized search catalogs to get information on pertinent data links and adresses, when he/she is not experienced in the field of the relevant information.

Accordingly, the chosen data links and adresses can also be statistically evaluated by a CPU 551, that means a kind of a hit statistics 131,132 - showing the frequency of choice of a data link or adress - can be generated and thus be provided to users for facilitating the choice of observation oppertunities, when defining new search profiles. The statistically evaluated hit lists, depicted as result list for agent "n" where "n" is for query in Fig.1, are provided as clusters. Based on these clusters proposed query agents are provided to the users with respect to the individual search terms.

Similarly, clusters can be generated on search profile titles 302,312,322 or on search profiles in general. Search titles , as shown in Fig. 3, name the respective search profile and are inputted by the user. The titles describing the observed subject are also statistically evaluated for improving the observation possibilities. Corresponding data links and adresses are accordingly clustered for being provided to users defining new search profiles.

Returning to Fig.1, after the search profile and the respective data link(s)and/or adresse(s), i.e. the exemplified URLs, have been defined the data networks 130 are spidered (step S3 in Fig.2), as will be explained later, resulting in indexing the spidered content. This indexed content is consequently matched with the search terms defined in the search profile (step S4 in Fig.2). When a data content does not fit to the search terms it is not passed through, so to say, the "filter" represented by the search terms. But if so, it is checked wether or not the "filtered" contents includes any new information which was not available during the last spidering process, as will also be described later in step S5 in Fig.2. The results which are referred to as result or hit list for the respective agents are shown to the user on his/her personal homepage.

With reference to Fig. 2, there is shown a flowchart illustrating the method of observing user orientated information in data networks.

As a first step the user defines at least one search profile including all terms and information which is of interest to said user (step S1). The search profile also includes at least one search agent, i.e. a domain or query agent as described above, which is selected by the user (step S2). The search agent is provided for storing adresses of relevant data therein. User selects data links, e.g. URLs, which comprise information relevant to the user. Further parameters can be set as the time period for discretly checking data for new or changed content. Another parameter could be the manner of how to be informed about the observed new information, e.g. by email, sms (short message service), fax or the like.

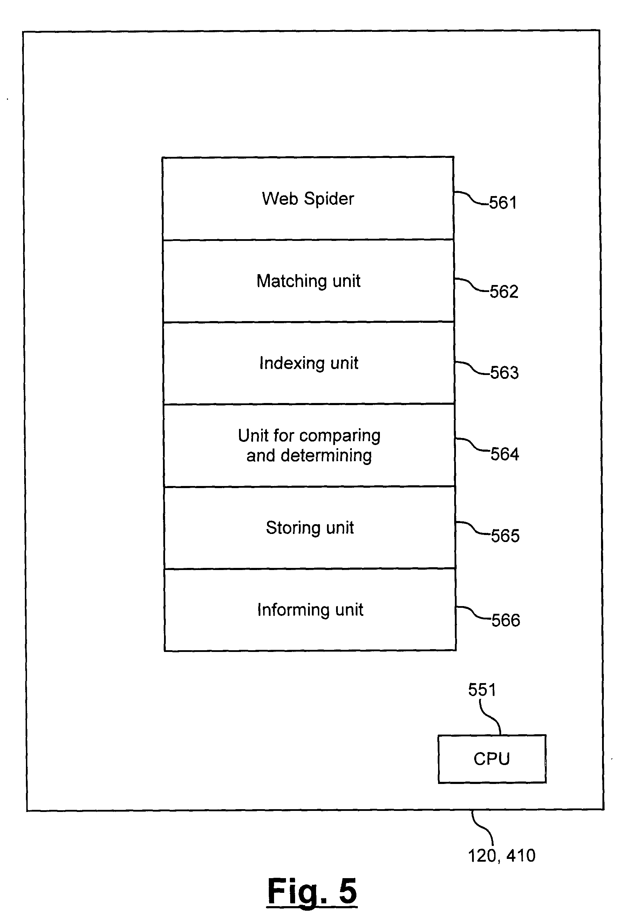

A module, as shwon in Fig. 5, designated "web spider" 561 spiders the selected data network (step S3). Spidering means that a content of the data file is retrieved therefrom by connecting to the respective data network, requesting the data to be observed, and transmitting the requested data back for matching. This spidering process is carried out automatically by robot programs searching the WWW and reporting thereabout to the requesting server. Before matching (step S4), this data content is indexed and subsequently matched with the defined search terms for being stored. If no search term has been defined but only a search agent the indexed content is nevertheless matched, wherein the entire content of the data remains after the matching process and is not filtered in the above mentioned manner. In this case, no data or information is rejected, the user is informed about a "new" content (step S8). Thus, it is possible to determine if there is any changing content of data irrespective of wether a previous search cycle has been carried out or not.

For example, this is useful for users trading products or services as books or for job agencies. A book trading user could be informed on any new published book edited by an author which is of his/her special interest. Accordingly, as illustrated in Fig.3, the author's name and a book title 307 could have been defined as the corresponding search terms 304 in the search profile 301. Further the data source of the corresponding publishing company could have been selected as data link or adress 308 where data files containing this kind of information can be found. With respecpt to the second example a special profession as, for example, taxi driver and a data source of a job center as data network could have been defined as search term 317 and search agent 318, 313, respectively.

In a third example, also illustrated in Fig. 3, a user may not only search for job offers but also look for a job, e.g. a teacher is wants a new job. Therefore, one can choose from the different offered query agents 329 one of his/her own domain agents 315, for example the domain agent defined in search profile 2. Due to the similarity of the user defined search terms 317,327 the domain agent 315 of the search profile 2 311 is also contained in the offered query agent 329 and thus is selectable. Nevertheless other data links and adresses of different users may be chosen.

Continuing in describing the method, as depicted in Fig.2, the indexed and matched content is compared with a previously stored content (step S6). If no content has been previously stored the indexed and matched content is stored (step S7) and the user is informed that new information is available (step S8). The manner of informing can be carried out by sending a short message, e.g. an email or a sms, to the user informing the user that a data link or adress which was determined to be observed has changed its content.

In the above-mentioned two examples this happens, if a new book is published or if an unemployed taxi driver decided to get a new job, wherein this kind of information was made available in the publishing company's and job center's data source, respectively.

If the data link or adress was already checked on a new content in a previous observing cycle, stored data (step S7) have been obtained by this process. In such a case, the indexed and matched content is compared with the previously stored one. When comparison reveals that content of the relevant data has changed, the previously stored content is replaced by the current indexed and matched content (S7). As a result, the user is informed as aforementioned about the new content.

When there is no difference between the indexed and matched content and the previously stored content, the user is not informed, and the observing process may start again, when a time period for repeating the process has been defined before. However, the user may also be informed that no changes have been observed.

The above described process can be repeated in time periods, e.g. twice a day, twice a week, once a day or the like, what ever seem to be appropriate to user's needs. The user is able to choose the duration of that time period. Further the user decides which data network is to be observed and is no longer dependent on the conventional search and information services as offered for example by search engine suppliers.

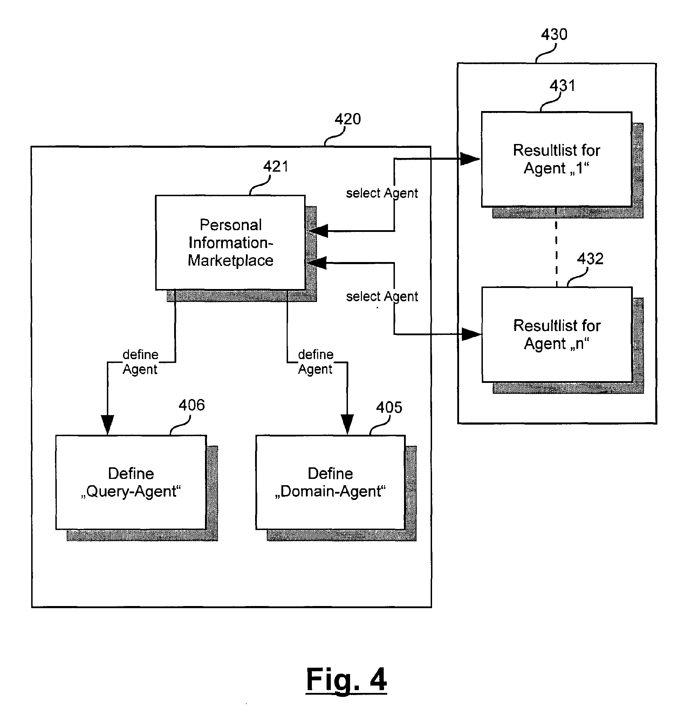

Fig. 4 shows a second embodiment of the present invention, wherein the observing and informing process is carried out directly on a personal computer 410 of the user. Fig. 4 is quiet similar to Fig. 1, except that the server 120 for connecting the user to a data network 430 has been omitted. The entire method is performed on the personal computer of the user. Therefore, detailed description of the operation has been omitted.

Fig. 5 illustrates the module composition of the embodiments of the present invention. A server or a personal computer of a user 120,410 is provided with a module comprising : a web spider 561, an indexing unit 562, a matching unit 563, a unit for comparing and determining 564, a storing unit 565, a CPU 551 and an informing unit 566 for carrying out the above-mentioned functions.

A computer program product may comprise any suitable storage medium storing the computer program carrying out the method according to the present invention.

It is readily apparent to the expert from foregoing that hereinbefore there have been mentioned embodiments which are exemplary only and which can be easily modified or supplemented without departing from the the present invention. Furthermore it should be clear that the elements of the embodiments described above may be realized by means of software, or by means of hardware, or by a combination of both of them.

### List of reference signs

- 105: domain agent
- 106: query agent
- 110, 410: client (personal computer)
- 120: server (host)
- 121: Personal Information Marketplace
- 130: data network
- 131, 132: result lists for search agents
- 301, 311, 321: search profiles
- 302, 312, 322: title of search profiles
- 303, 313, 323: search agents
- 304, 314, 324: search terms
- 305, 315, 325: domain agents
- 306, 316, 326: query agents
- 307, 317, 327: specific search terms
- 308, 318, 328: specific domain agents
- 309, 319, 329: specific query agents
- 551: CPU
- 561: web spider
- 562: indexing unit
- 563: matching unit
- 564: unit for comparing and determining
- 565: storing unit
- 566: informing unit

## Claims

1. A method for observing user orientated information from a data network, comprising the steps of:
a) inputting an user defined search profile (301) having at least one search agent (303);
b) spidering a data content of said data network (130) by a web spider (561);
d) indexing said spidered content;
e) matching said indexed content with said search profile (301);
f) comparing said indexed and matched content with a previously stored content, and determing if there is any difference between said indexed and matched content and said previously stored content,
g) storing said indexed and matched content as new data content, and
h) informing said user about said new data content, when said comparison reveals a difference therebetween.

2. A method according to claim 1, wherein said search agent (303) is defined as a domain agent (305) and/or a query agent (306) by selecting at least one data link or adress (308,309) which is of interest to said user and is stored therein.

3. A method according to claim 1, further comprising the step of inputting a search profile title (302) naming said search profile.

4. A method according to claim 2, wherein said selection of said data link or adress is carried out by manually inputting said data link or adress by said user.

5. A method according to claim 2, wherein said selection of data link or adress is carried out by selecting data link or adress which has been selected by a different user stored in said search agent of said different user including selected data links and adresses which are of intererst to said different user.

6. A method according to claim 5, wherein said query agent being generated from said data links and adresses of different users is provided to said user based on a statistically evaluated hit list (132) with respect to said respective search term (304) as a cluster.

7. A method according to claim 6, wherein said cluster is generated on said search profile titles.

8. A method according to claim 6, wherein said cluster is generated on said search profiles.

9. A method according to any of claims 1 to 8, wherein said search profile is defined to be used in the WWW, and said data links and adresses are URLs (308).

10. A method according to any of claims 1 to 9, wherein said indexed and matched content is not stored, if there is no difference determined in step f).

11. A method according to one of the claims 1 to 10, wherein at least one search term (304) is inputted in said search profile.

12. A method according to claim 11, wherein said search term is inputted from a text document.

13. A method according to claim 1, wherein a time period for repeating steps b) to h) is set by said user and stored in said search profile.

14. An apparatus for observing user orientated information from a data network comprising :
an inputting unit for inputting an user defined search profile (301) having at least one search agent (303);
a web spider (561) for spidering a data content of said data network (130);
an indexing unit (562) for indexing said spidered content;
a matching unit (563) for matching said indexed content with said search profile;
a unit (564) for comparing said indexed and matched content with a previously stored content, and for determing if there is any difference between said indexed and matched content and said previously stored content,
a storing unit (565) for storing said indexed and matched content as new data content, and
an informing unit (566) for informing said user about said new data content, when said comparison reveals a difference therebetween.

15. An apparatus according to claim 14, where said apparatus is a server (120) which is connected to said data network (130) and to a personal computer (110) being used by said user.

16. An apparatus according to claim 14, wherein said apparatus is a personal computer (410) which is connected to said data network (430).

17. An apperatus according to claim 14 or 15, wherein said data network (130,430) is the WWW.

18. An apparatus according to claim 14 or 15, wherein said inputting unit is adapted for inputting said data link or adress from said user.

19. An apparatus according to claim 14 or 15, further comprising:
a CPU (551) for statistically evaluating hit lists with respect to said search term being stored as a cluster.

20. A computer program comprising computer executable instructions for causing a computer to carry out a method according to any of claims 1 to 13.

21. A computer program product comprising computer executable instructions for causing a computer to carry out a method according to any of claims 1 to 13.

22. A data structure comprising :
at least one search profile (301) which can be used on a computer carrying out a method according to any of claims 1 to 13.

23. A data signal transmittable over a data network comprising:
at least one search profile (301) which can be used on a computer carrying out a method according to any of claims 1 to 13.
